(19) Europäisches Patentamt
European Patent Office
Office européen des brevets

(11) EP 1 707 995 A1

(12) EUROPEAN PATENT APPLICATION
published in accordance with Art. 158(3) EPC

(43) Date of publication:
**04.10.2006 Bulletin 2006/40**

(21) Application number: **05709262.9**

(22) Date of filing: **18.01.2005**

(51) Int Cl.:
***G02B 5/30*** *(2006.01)*

(86) International application number:
**PCT/JP2005/000808**

(87) International publication number:
**WO 2005/069048 (28.07.2005 Gazette 2005/30)**

(84) Designated Contracting States:
**DE**

(30) Priority: **19.01.2004 JP 2004010283**
**19.05.2004 JP 2004149375**
**27.12.2004 JP 2004376442**

(71) Applicant: **MITSUBISHI CHEMICAL CORPORATION**
**Tokyo 108-0014 (JP)**

(72) Inventors:
- **HASEGAWA, Ryuichi**
**Yokohama-shi,**
**Kanagawa 2278502 (JP)**
- **OIZUMI, Junichi**
**Yokohama-shi,**
**Kanagawa 2278502 (JP)**
- **KADOWAKI, Masami**
**Yokohama-shi,**
**Kanagawa 2278502 (JP)**
- **YONEYAMA, Tomio**
**Yokohama-shi,**
**Kanagawa 2278502 (JP)**
- **SANO, Hideo**
**Yokohama-shi,**
**Kanagawa 2278502 (JP)**

(74) Representative: **ter Meer, Nicolaus**
**TER MEER STEINMEISTER & PARTNER GbR,**
**Patentanwälte,**
**Mauerkircherstrasse 45**
**81679 München (DE)**

# (54) DYE COMPOSITION FOR ANISOTROPIC DYE FILM, ANISOTROPIC DYE FILM AND POLARIZER

(57) To provide a dye composition for an anisotropic dye film, capable of forming an anisotropic dye film which has good heat resistance, has little defects and shows high dichroism; an anisotropic dye film formed by using such a composition for an anisotropic dye film; and a polarizing element employing such an anisotropic dye film.

Fig. 1

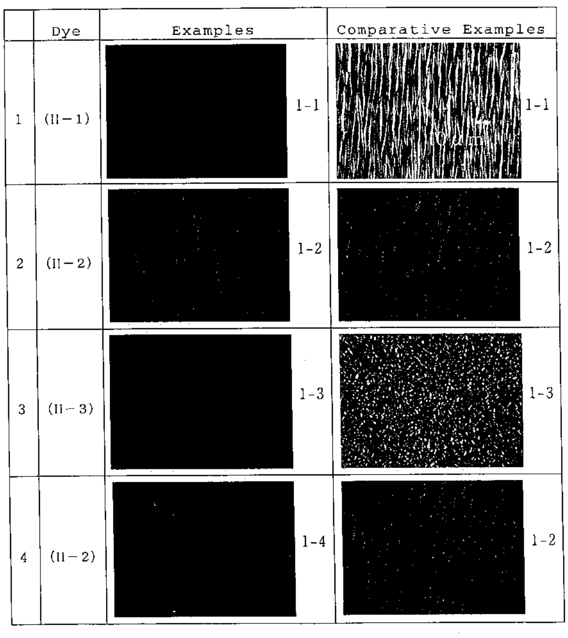


EP 1 707 995 A1

## Description

### TECHNICAL FIELD

The present invention relates to dye compositions for anisotropic dye films capable of forming anisotropic dye films showing high dichroism, which are useful for e.g. polarizing plates provided on display devices such as light control devices, liquid crystal devices (LCD) or organic electroluminescence devices (OLED), anisotropic dye films formed by using such dye compositions for anisotropic dye films, and polarizing elements employing such anisotropic dye films.

### BACKGROUND ART

In LCD, linear polarizers or circular polarizers are used to control optical rotation or birefringence in display. Also in OLED, circular polarizers are used to prevent reflection of outside light. Heretofore, for such polarizers (polarizing elements), iodine has been widely used as a dichroic material. However, iodine is highly sublimable and thus has had a drawback that when it is used for a polarizing film, its heat resistance or light fastness is inadequate.
Therefore, as disclosed in e.g. patent document 1 or non-patent documents 1 and 2, an anisotropic dye film as a polarizing film has been studied wherein an organic dye is used as a dichroic material. However, conventional organic dye films have had a problem such that only dye films or polarizing elements are obtainable which are substantially inferior in dichroism as compared with ones employing iodine.

Patent Document 1: U.S. Patent 2,400,877
Non-Patent Document 1: Dreyer, J.F., Phys. And Colloid Chem., 1948, 52, 808., "The Fixing of Molecular Orientation"
Non-Patent Document 2: Dreyer, J.F., Journal de Physique, 1969, 4, 114., "Light Polarization From Films of Lyotropic Nematic Liquid Crystals"

### DISCLOSURE OF THE INVENTION

It is an object of the present invention to provide a dye composition for an anisotropic dye film capable of forming an anisotropic dye film which has good heat resistance, has little defects and shows high dichroism, an anisotropic dye film formed by using such a dye composition for an anisotropic dye film, and a polarizing elements employing such an anisotropic dye film.
The present inventors have conducted an extensive study to solve the above-mentioned problems and as a result, have found it possible to provide an anisotropic dye film which has good heat resistance, has little defects and shows high dichroism, by using a dye composition for an anisotropic dye film which contains a compound (hereinafter referred to as "the compound of the present invention") having at least two groups selected from the group consisting of an acidic group, a basic group and a neutral group, wherein at least one of said at least two groups is a basic group. Thus, the present invention has been accomplished.
The present invention provides the following:

(1) A dye composition for an anisotropic dye film, which comprises a dye and a compound having at least two groups selected from the group consisting of an acidic group, a basic group and a neutral group, wherein at least one of said at least two groups is a basic group.
(2) The dye composition for an anisotropic dye film according to (1), wherein the content of the compound to the dye is at least 0.05 and at most 4 by molar ratio.
(3) The dye composition for an anisotropic dye film according to (1) or (2), wherein the compound is a cyclic compound.
(4) The dye composition for an anisotropic dye film according to (1) or (2), wherein the compound is a hydroxylamine.
(5) The dye composition for an anisotropic dye film according to (1) or (2), wherein the compound is an amino acid.
(6) The dye composition for an anisotropic dye film according to any one of (1) to (5), wherein the composition is a solution which further contains a solvent.
(7) The dye composition for an anisotropic dye film according to any one of (1) to (6), wherein the dye is an acidic dye.
(8) The dye composition for an anisotropic dye film according to any one of (1) to (7), wherein the dye is an azo dye.
(9) An anisotropic dye film formed by using the dye composition for an anisotropic dye film as defined in any one of (1) to (8).
(10) The anisotropic dye film according to (9), formed by a wet system deposition method.
(11) The anisotropic dye film according to (9) or (10), wherein the film thickness is at most 30 μm.
(12) An anisotropic dye film comprising a dye and a compound having at least two groups selected from the group consisting of an acidic group, a basic group and a neutral group, wherein at least one of said at least two groups is a basic group.

(13) The anisotropic dye film according to any one of (9) to (12), which has a dichroic ratio of at least 5.
(14) The anisotropic dye film according to any one of (9) to (12), wherein the order parameter before a heat resistance test at 170°C for 30 minutes, is at least 0.5, and the decrease in the order parameter after the heat resistance test is at most 7%.
(15) A polarizing element employing the anisotropic dye film as defined in any one of (9) to (14).

EFFECTS OF THE INVENTION

According to the present invention, an anisotropic dye film is provided which has good heat resistance, has little defects and shows high dichroism, and by such an anisotropic dye film, a polarizing element is provided which is excellent in heat resistance and light fastness and which is excellent also in polarizing performance.

BRIEF DESCRIPTION OF THE DRAWINGS

Fig. 1 is microscopic photographs showing defects in anisotropic dye films obtained in Examples 1-1 to 1-4 and Comparative Examples 1-1 to 1-3.

BEST MODE FOR CARRYING OUT THE INVENTION

Now, the present invention will be described in detail with reference to practical embodiments, but it should be understood that the following description of the constituting elements are merely exemplary (typical examples) of practical embodiments of the present invention, and the present invention is by no means thereby restricted.
The anisotropic dye film in the present invention is a dye film having anisotropy in an electromagnetic characteristic in optional two directions selected from a total of three directions in a three-dimensional coordinate system comprising the thickness direction of the dye film and mutually perpendicular optional two in-plane directions. The electromagnetic characteristic may, for example, be an optical characteristic such as absorption or refraction, or an electric characteristic such as resistance or capacitance. As a film having an optical anisotropy in e.g. absorption or refraction, a linearly polarizing film, a circularly polarizing film, a phase difference film or an anisotropic electroconductive film may, for example, be mentioned.
The anisotropic dye film of the present invention is preferably employed for a polarizing film, a phase difference film or an anisotropic electroconductive film. Particularly preferably, it is employed for a polarizing film.

DYE COMPOSITION FOR ANISOTROPIC DYE FILM

Firstly, the dye composition for an anisotropic dye film of the present invention will be described.
The dye composition for an anisotropic dye film of the present invention is characterized by comprising a dye and a compound (hereinafter referred to as the compound of the present invention) having at least two groups selected from the group consisting of an acidic group, a basic group and a neutral group, wherein at least one of said at least two groups is a basic group.

COMPOUND OF THE INVENTION

The compound of the present invention is a compound having at least two groups selected from the group consisting of an acidic group, a basic group and a neutral group, wherein at least one of said at least two groups is a basic group, i.e. either one of the following compounds.

(1) A compound having at least two basic groups.
(2) A compound having at least one basic group and at least one acidic group.
(3) A compound having at least one basic group and at least one neutral group.
(4) A compound having at least one basic group, at least one acidic group and at least one neutral group.

The details of the functional mechanism whereby the dichroism or heat resistance of the anisotropic dye film is improved by the incorporation of the compound of the present invention, are not clearly understood, but it is considered as follows.
The compound of the present invention has at least one basic group. Such at least one basic group is considered to have a mutual action with an acidic group of the dye molecule in the anisotropic dye film in a case where the dye

molecule has such an acidic group. By such a mutual action, the dye is considered to have the molecular orientation increased via the compound of the present invention. And, it is considered that by the increase of the molecular orientation of the dye, the anisotropic dye film will have its defects reduced to increase the dichroism.

Further, in addition to such one basic group having a mutual action with the dye molecule, the compound of the present invention further has at least one acidic, basic or neutral group. It is considered that by such acidic, basic or neutral group, the dye and the compound of the present invention will form a salt or will be agglomerated, whereby the dye composition for an anisotropic dye film will be prevented from becoming unstable.

Especially when the compound of the present invention having a basic group is present against a dye molecule having a terminal acidic group, an acid/base bond will be formed, whereby the dye molecules will be regularly oriented to provide a function as a polarizing plate. However, if the bonding frequency of acid/base is too high, agglomeration may rather takes place, whereby it becomes difficult to prepare a film. It is considered that in the present invention, for example, by using a compound containing basic groups more than acidic groups, bonding of the basic groups with the terminal acidic groups of the dye molecule will be properly prevented to provide a proper bonding frequency of acid/base, whereby it is possible to prepare a film wherein dye molecules are regularly oriented without being agglomerated.

Further, deterioration in performance of the anisotropic dye film by heating is considered to be caused by disturbance of the molecular orientation of the dye or a change of the molecular orientation to an undesirable direction when the dye oriented in the film receives thermal fluctuation by the heating. As mentioned above, the compound of the present invention serves to provide intermolecular interactions such as an electrostatic attracting force, a repulsive force and a hydrogen bond with functional groups of the dye. Such interactions of attracting and repulsive forces function simultaneously between the compound and the dye, whereby agglomeration due to too much bonding with the dye, or phase separation due to too much repulsion, can be prevented.

Thus, it is considered that also in the anisotropic dye film of the present invention, such intermolecular interactions will work in good balance between the compound of the present invention and the dye, which serves a role of fixing the molecular orientation of the dye in the optimum direction. And, it is considered that by such fixing of the orientation of dye molecules, the change in orientation of dye molecules by heating can be suppressed, whereby the heat resistance of the anisotropic dye film is improved.

Such a compound of the present invention is usually a water-soluble compound.

The basic group, the acidic group and the neutral group, which the composition of the present invention has, are as follows. The acidic group and the basic group are functional groups such that in an aqueous solution having an inert support electrolyte added in an amount of from 0.1 to 3 mol/dm, the acidic group is a functional group having a pka of less than 7, and the basic group is a functional group having a pka of at least 7. Further, the neutral group is a group having no dissociation constant. Further, as disclosed in Kagaku Binran Kisohen (Chemical Handbook Basic) II, p.331 (compiled by Chemical Society of Japan, published by Maruzen Co., Ltd.), pka is logarithmic value of the reciprocal of the dissociation constant ka, i.e. -log ka.

As the acidic group, which the compound of the present invention has, a sulfo group, a carboxyl group or a phosphoric group may, for example, be mentioned.

As the basic group, an amino group, a sulfonium group, a pyrrole group, a 3-pyrroline group, a pyrrolidine group, a pyrazole group, a 2-pyrazoline group, a pyrazolidine group, an imidazole group, a 1,2,3-triazole group, a 1,2,4-triazole group, a pyridine group, a pyridazine group, a piperidine group, a pyrazine group, a piperazine group, a pyrimidine group or a triazine group may, for example, be mentioned.

As the neutral group, a hydroxyl group, an amine oxide group, a sulfoxide group or a phosphine oxide group may, for example, be mentioned.

The above groups may further have substituents, so long as such substituents do not substantially change the properties of the dye composition for an anisotropic dye film of the present invention.

Some or all of acidic groups and basic groups contained in the compound of the present invention may take salt forms. The salt form of a basic group may, for example, be a salt of an inorganic acid such as hydrochloric acid or sulfuric acid, or a salt of an organic acid such as acetic acid or formic acid. Further, the salt form of an acidic group may, for example, be a salt of an alkali metal such as Na, Li or K, an ammonium salt which may be substituted by an alkyl group or a hydroxyalkyl group, or an organic amine salt. In the case of these salt forms, their types may not be restricted to one type, and a plurality of different types may be present as mixed.

The molecular weight of the compound of the present invention is usually at least 60, preferably at least 75, more preferably at least 100, particularly preferably at least 140, and preferably at most 300, more preferably at most 250, particularly preferably at most 200.

The compound of the present invention is preferably a compound having a carbon number of at least 1, more preferably at least 3, particularly preferably at least 6 and preferably at most 15, further preferably at most 12, particularly preferably at most 10.

In order to effectively obtain the above effects by the compound of the present invention, the number of basic groups which the compound of the present invention has, may be at least 1, preferably at least 2 and at most 5, more

preferably at most 4. Further, in a case where the compound of the present invention has basic groups only i.e. without having a neutral group or an acidic group, the number of basic groups is preferably at least 3 and at most 5, more preferably at most 4.

When the compound of the present invention has acidic groups, the number of acidic groups may be at least 1, preferably at most 4, more preferably at most 3. Further, the relative ratio of the number of basic groups/the number of acidic groups in the compound of the present invention, is preferably at least 1.3 and at most 4.

When the compound of the present invention has neutral groups, the number of neutral groups may be at least 1, and the number is not particularly limited but is usually at most 8, preferably at most 6.

Further, in a case where the compound of the present invention has at least two basic groups, acidic groups or neutral groups, such at least two groups may be the same groups or different groups.

The compound of the present invention may be either a linear compound or a cyclic compound.

As the compound of the present invention, amines are preferred, and particularly preferred are amino acids, betains, hydroxyamines or cyclic compounds having basic groups.

The amino acids are classified into a neutral amino acid, an acidic amino acid and a basic amino acid, from the nature and the number of acidic groups and basic groups.

Specific examples of the neutral amino acid include glycine, alanine, valine, leucine, isoleucine, phenylalanine, tyrosine, tryptophan, serine, threonine, proline, 4-hydroxyproline, cysteine, cystine, methionine, asparagine, glutamine, β-alanine, citrulline, creatine and kynurenine. Among them, particularly preferred are phenylalanine, aspargine, 4-hydroxyproline and β-alanine.

Further, specific examples of the acidic amino acid include aspartic acid, glutamic acid, etc. Among them, particularly preferred is aspartic acid and glutamic acid.

Further, specific examples of the basic amino acid include lysine, arginine and histidine.

The molecular weight of the amino acid is usually at least 60, preferably at least 75 and usually at most 300, preferably at most 250. If the molecular weight of the amino acid is too large, the molecular size will be large, whereby orientation of dye molecules is likely to be disturbed. On the other hand, if it is too small, the effect for fixing the orientation of dye molecules may not sufficiently be obtained.

The betains include, for example, a carboxylalkyltrialkylammonium hydroxide, a carboxyalkylpyridinium hydroxide, a sulfoalkyltrialkylammonium hydroxide, a sulfoalkylpyridinium hydroxide, a phosphoalkyltrialkylammonium hydroxide, a phosphoalkylpyridinium hydroxide, and derivatives of these compounds. Among them, carboxymethyltrimethylammonium hydroxide and sulfopropylpyridinium hydroxide are preferred.

The molecular weight of the betain is usually at least 60, preferably at least 75 and usually at most 300, preferably at most 250. If the molecular weight of the betain is too large, the molecular size will be large, whereby the orientation of dye molecules is likely to be disturbed. On the other hand, if it is too small, the effect for fixing the orientation of dye molecules may not sufficiently be obtained.

The hydroxylamines include, for example, an aminoalkyl alcohol, a diaminoalkyl alcohol, an aminoalkyldiol and a diaminoalkyldiol. Among them, aminopropanediol is preferred.

The molecular weight of the hydroxyamine is usually at least 60, preferably at least 75 and usually at most 300, preferably at most 250. If the molecular weight of the hydroxyamine is too large, the molecular size will be large, whereby the orientation of dye molecules is likely to be disturbed. On the other hand, if it is too small, the effect for fixing the orientation of dye molecules may not sufficiently be obtained.

The cyclic compounds having basic groups, include, for example, aminopyridine, diaminopyridine, triaminopyridine, aminopyridazine, diaminopyridazine, triaminopyridazine, amimopyrimidine, diaminopyrimidine, triaminopyrimidine, aminopyrazine, diaminopyrazine, triaminopyrazine, aminotriazine, diaminotriazine and triaminotriazine. Among them, triaminopyrimidine is preferred.

The molecular weight of the cyclic compound having basic groups is usually at least 60, preferably at least 75 and usually at most 300, preferably at most 250. If the molecular weight of the cyclic compound having basic groups is too large, the molecular size will be large, whereby the orientation of dye molecules is likely to be disturbed. On the other hand, if it is too small, the effect for fixing the orientation of dye molecules may not sufficiently be obtained.

With respect to the compound of the present invention as described above, one type may be used alone, or compounds of the same type or compounds of different types may be used in combination as a mixture of two or more of them. Further, optical isomers of e.g. an amino acid may be used alone or in combination. Further, it may contain a salt form compound and a free form compound, or may contain compounds of different salt forms.

The blend amount of the above-described compound of the present invention in the dye composition for an anisotropic dye film of the present invention is preferably at least 0.05, particularly preferably at least 0.1 and preferably at most 4, particularly preferably at most 3 by a molar concentration ratio to the dye (the molar concentration ratio of the compound of the present invention to the dye) in order to sufficiently obtain the effect for improving the heat resistance, etc. and in order not to hinder the orientation of dye molecules. If the blend amount of the compound of the present invention is too small, no adequate effect for improving the heat resistance, etc. will be obtained by the incorporation of

the compound of the present invention. On the other hand, if it is too large, the compound of the present invention is likely to precipitate in the anisotropic dye film.

DYE AND OTHER COMPONENTS

The dye to be used for the dye composition for an anisotropic dye film of the present invention is usually one having an absorption wavelength of from 400 to 700 nm.

The dye to be used for the dye composition for an anisotropic dye film of the present invention is preferably a dye having an acidic group as a functional group with a view to effectively obtaining the above-described intermolecular interaction with the compound of the present invention. Such an acidic group may, for example, be a sulfo group, a carboxyl group or a phosphoric group, and such a group may further have a substituent. From the viewpoint of the high solubility and the strength of the intermolecular interaction with the compound of the present invention, the acidic group is preferably a sulfo group or a carboxyl group.

These acidic groups may be in a free acid form, or some or all of them may be in a salt form. Or, a dye in a salt form and a dye in a free acid form may be present as mixed. The salt form may, for example, be a salt of an alkali metal such as Na, Li or K, an ammonium salt which may be substituted by an alkyl group or a hydroxyalkyl group, or an organic amine salt. The organic amine may, for example, be a $C_{1-6}$ lower alkylamine, a hydroxy-substituted $C_{1-6}$ lower alkylamine or a carboxy-substituted $C_{1-6}$ lower alkylamine. These salt forms may be used alone or in combination as a mixture of a plurality of them.

The dye to be used in the present invention is preferably an azo dye, whereby a distinct effect can be obtained when it is combined with the compound of the present invention. The number of azo groups in the azo dye is preferably at least 2 and at most 4, more preferably 3, from the viewpoint of the chromaticness and the production efficiency.

Further, the dye to be used in the present invention is preferably water-soluble, since it is subjected to the after-mentioned wet system film-forming method.

Further, the dye to be used in the present invention has a molecular weight of usually at least 200, preferably at least 300 and usually at most 1,500, preferably at most 1,200, in a free state not taking a salt form, from the viewpoint of the production efficiency of the dye and the polarizing performance.

Specific examples of such a dye include dyes disclosed in the above-mentioned patent document 1, non-patent documents 1 and 2 and non-patent document 3 (J.Lydon, "Chromonics" in "Handbook of Liquid Crystals Vol. 2B: Low Molecular Weight Liquid Crystals II", D. Demus, J. Goodby, G.W. Gray, H.W. Spiessm V. Vill ed., Willey-VCH. P. 981-1007, (1998)) and dyes having structures shown in the following formulae (I-1) to (I-14) and from (II-1) to (II-4). However, the dye is not limited to such specific examples.

(I－1)

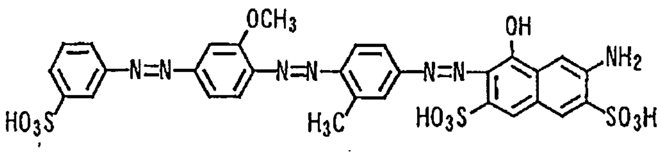

(I－2)

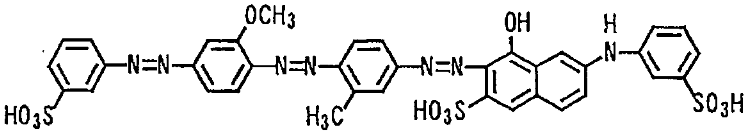

(I-3)

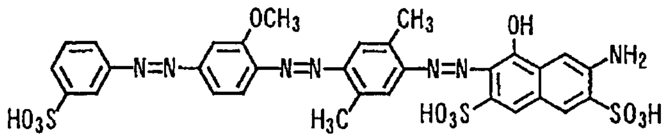

(I-4)

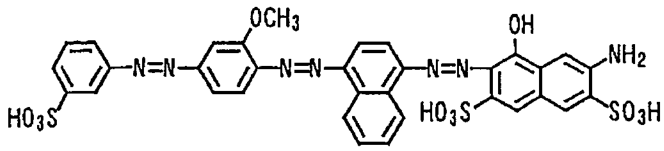

(I-5)

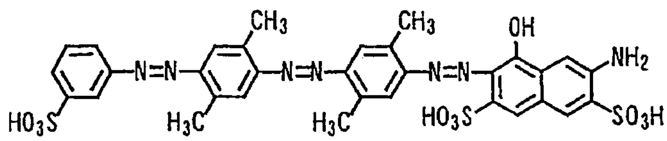

(I-6)

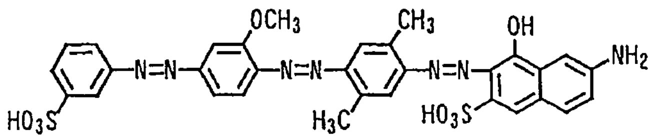

(I-7)

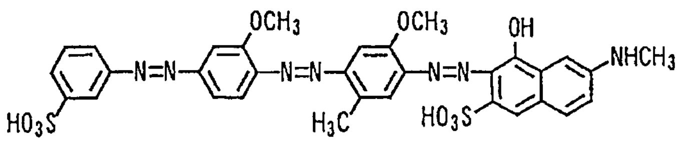

(I-8)

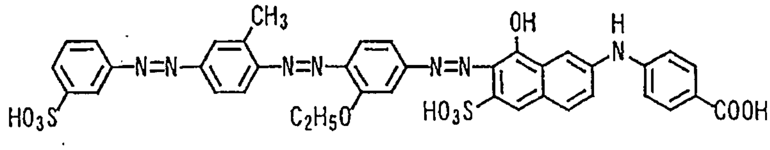

(I-9)

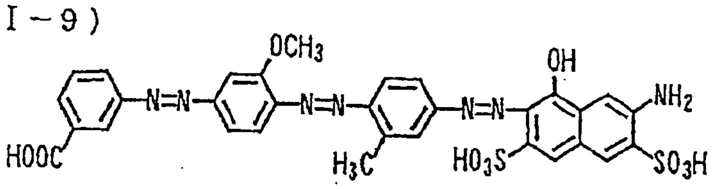

(I-10)

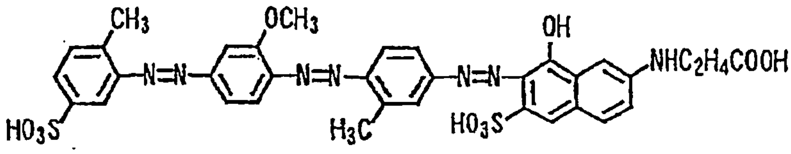

(I-11)

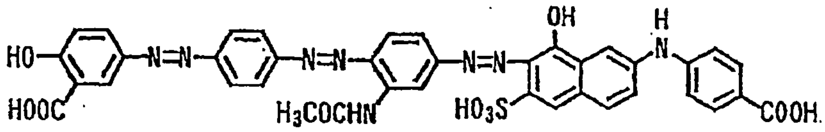

(I-12)

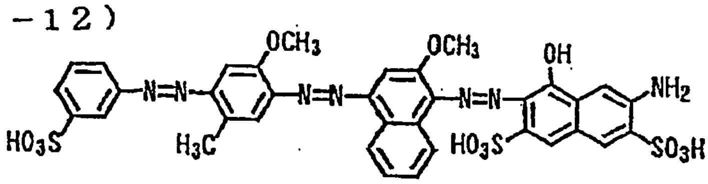

(I-13)

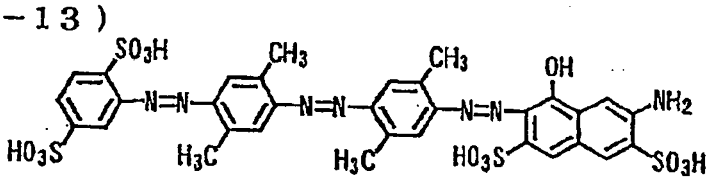

(I-14)

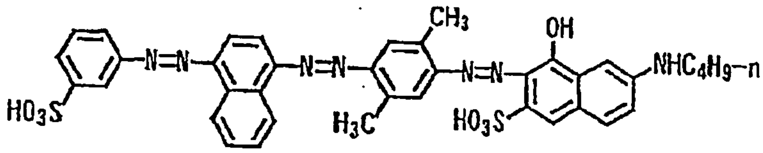

(I-15)

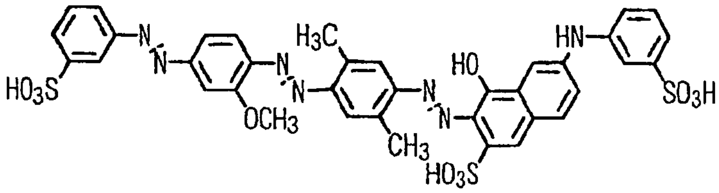

(II-1)

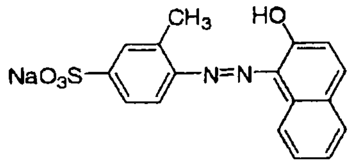

(II-2)

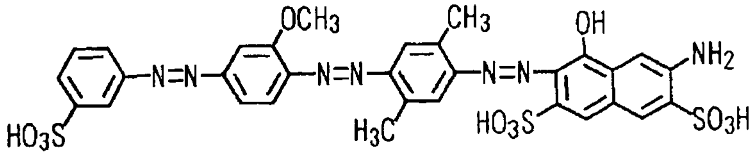

(II-3)

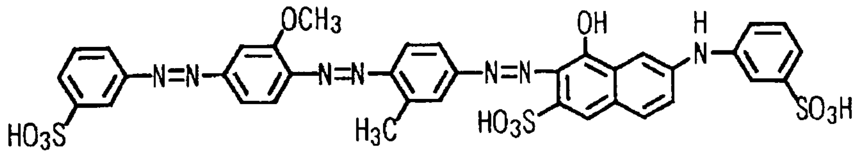

(II-4)

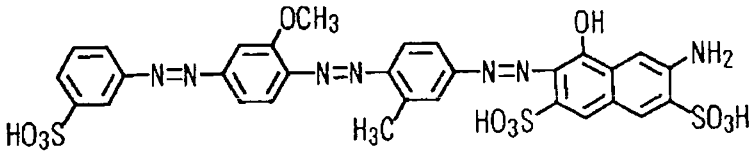

These dyes can be produced in accordance with methods per se well known. For example, the dye represented by the formula (I-1) can be produced by the following steps (A) to (C).

(A) From 3-aminobenzenesulfonic acid (metanilic acid) and 2-methoxyaniline (o-anisidine), a monoazo compound is produced via diazotization and coupling steps in accordance with a common method (e.g. "New Dye Chemistry" edited by Hosoda Yutaka, published by Gihodo on December 21, 1973) p. 396-409).
(B) The obtained disazo compound is likewise diazotized by a common method, followed by a coupling reaction with 3-methylaniline (m-toluidine), to obtain a disazo compound.
(C) The obtained disazo compound is likewise diazotized by a common method, followed by a coupling reaction with 7-amino-1-naphthol-3,6-disulfonic acid (RR acid) and salting out with sodium chloride to obtain the desired dye number (I-1).

In the dye composition for an anisotropic dye film of the present invention, the above-mentioned dyes may be used alone, but two or more of them may be used in combination. Further, dyes other than the above exemplified dyes may also be incorporated to such an extent not to decrease the orientation. Thus, anisotropic dye films having various colors can be produced.

In a case where other dyes are to be blended, examples of such dyes to be blended include C.I. Direct Yellow 12, C.I. Direct Yellow 34, C.I. Direct Yellow 86, C.I. Direct Yellow 142, C.I. Direct Yellow 132, C.I. Acid Yellow 25, C.I. Direct Orange 39, C.I. Direct Orange 72, C.I. Direct Orange 79, C.I. Acid Orange 28, C.I. Direct Red 39, C.I. Direct Red 79, C.I. Direct Red 81, C.I. Direct Red 83, C.I. Direct Red 89, C.I. Acid Red 37, C.I. Direct Violet 9, C.I. Direct Violet 35, C.I. Direct Violet 48, C.I. Direct Violet 57, C.I. Direct Blue 1, C.I. Direct Blue 67, C.I. Direct Blue 83, C.I. Direct Blue 90, C.I. Direct Green 42, C.I. Direct Green 51, and C.I. Direct Green 59.

In a case where the above dyes to be blended have acidic groups, such acidic groups may be in a free acid form, or some or all of the acidic groups may be in a salt form. Further, a dye in a salt form and a dye in the free acid form may be present as mixed.

As mentioned above, the dye having acidic groups to be used in the present invention, may be used in its free acid form, or some of acidic groups may take a salt form. Further, a dye in a salt form and a dye in an acid form may be present as mixed. Accordingly, when it is obtained in a salt form at the time of its production, it may be used as it is or may be converted to a desired salt form. As a method for conversion to a salt form, a known method may optionally be employed. For example, the following methods (1) to (4) may be mentioned.

(1) A method wherein a strong acid such as hydrochloric acid is added to an aqueous solution of a dye obtained in a salt form, to let the dye precipitate in the form of a free acid, and then the acidic groups of the dye are neutralized with an alkali solution having a desired counter ion (such as a lithium hydroxide aqueous solution) for conversion to a salt.

(2) A method wherein a large excess amount of a neutral salt having a desired counter ion (such as lithium chloride) is added to an aqueous solution of a dye obtained in a salt form to carry out a salt exchange in the form of a salted out cake.

(3) A method wherein an aqueous solution of a dye obtained in a salt form is treated with a strongly acidic ion exchange resin to let the dye precipitate in the form of a free acid, and then the acidic groups of the dye are neutralized with an alkali solution having a desired counter ion (such as a lithium hydroxide aqueous solution) for conversion to a salt.

(4) A method wherein an aqueous solution of a dye obtained in a salt form is treated with a strongly acid ion exchange resin preliminarily treated with an alkali solution having a desired counter ion (such as a lithium hydroxide aqueous solution), to carry out a salt exchange.

The dye composition for an anisotropic dye film of the present invention comprises the above-described compound of the present invention and the dye, but as the case requires, additives such as a solvent, a surfactant and a pH-adjusting agent may be incorporated.

As the solvent to be used in the present invention, water, an organic solvent miscible with water or their mixture is suitable. A specific example of the organic solvent may, for example, be a single solvent or a mixed solvent of two or more, selected from alcohols such as methyl alcohol, ethyl alcohol and isopropyl alcohol, glycols such as ethylene glycol and diethylene glycol, and cellosolves such as methyl cellosolve and ethyl cellosolve.

In a case where the dye composition for an anisotropic dye film of the present invention is a solution containing such a solvent, the concentration of the dye in the dye composition for an anisotropic dye film, is usually preferably at least 0.01 wt%, particularly preferably at least 0.1 wt% and usually preferably at most 50 wt%, particularly preferably at most 30 wt%. If the dye concentration is too low, sufficient dichroism can not be obtained in the anisotropic dye film, and if it is too high, the dye is likely to precipitate.

In a case where the dye composition for an anisotropic dye film of the present invention is applied in the form of a dye solution to a substrate by e.g. the after-mentioned wet system film forming method, an additive such as a surfactant may be added, as the case requires, in order to improve the coating property or wettability to the substrate. As such a surfactant, an anionic, cationic or nonionic surfactant may be used. The concentration is usually preferably at least 0.05 wt% and at most 0.5 wt%, as the concentration in the dye composition for an anisotropic dye film and as an amount sufficient to obtain the desired effect and not to impair the orientation of the dye molecules.

Further, for the purpose of e.g. suppressing instability such as agglomeration or salt-formation of the dye and the compound of the present invention in the dye composition for an anisotropic dye film of the present invention, a pH controlling agent such as a known acid or alkali may be added before or after mixing the constituting components to carry out the pH control.

Further, as additives other than the above, known additives disclosed in "Additive for Coating", edited by J. Bieleman, Willey-VCH (2000), may be employed.

## ANISOTROPIC DYE FILM

Now, the anisotropic dye film formed by using such a dye composition for an anisotropic dye film of the present

invention, will be described. With the above described dye composition for an anisotropic dye film of the present invention comprising the compound of the present invention and the dye, the dye can exhibit a high level of molecular orientation. Accordingly, the anisotropic dye film of the present invention formed by using such a dye composition for an anisotropic dye film of the present invention, is a useful dye film showing high dichroism.

The anisotropic dye film of the present invention shows a high dichroic ratio and is preferably one having a dichroic ratio of at least 5, more preferably at least 10, particularly preferably at least 15.

Further, as mentioned above, in the dye composition for an anisotropic dye film of the present invention comprising the compound of the present invention and the dye, an intermolecular interaction works between the compound of the present invention and the dye. And, also in the anisotropic dye film formed by using such a dye composition for an anisotropic dye film, such an intermolecular interaction will work, whereby the orientation of dye molecules will be fixed, and disturbance or change in direction of the orientation during the heating will be suppressed, thus leading to a useful anisotropic dye film showing high heat resistance.

The heat resistance of the anisotropic dye film which is practically required, is determined depending upon the environment in which the anisotropic dye film is to be used and the process for producing a display device or the like wherein the anisotropic dye film will be provided. In the present invention, as a standard for comparison of the heat resistance, a decrease of the order parameter showing the molecular orientation degree by a heat resistance test is employed. As a specific heat resistance test, a test condition may, for example, be such that the film is held in an environment of 170°C for 30 minutes. As a sufficient heat resistance performance of an anisotropic dye film, the decrease of the order parameter under such a condition is preferably at most 7%, more preferably at most 5%, particularly preferably at most 4.6%.

The anisotropic dye film of the present invention preferably has a high degree of molecular orientation from the practical viewpoint, and it is preferably one having an order parameter value of at least 0.5, more preferably at least 0.6, particularly preferably at least 0.7, before the heat resistance test.

Such an anisotropic dye film of the present invention is prepared by a dry system film-forming method or a wet system film-forming method by using the dye composition for an anisotropic dye film of the present invention. In the present invention, in a case where the solution containing the dye is likely to show liquid crystallizability, it is preferred to use the wet system film-forming method.

The dry system film-forming method may, for example, be a method of stretching a non-stretched film obtained e.g. by a method wherein a high molecular weight polymer is formed into a film which is then dyed with the dye composition for an anisotropic dye film of the present invention, or by a method wherein the dye composition for an anisotropic dye film of the present invention is added to the solution of a high molecular weight polymer to dye the stock solution, followed by film-forming. Such dyeing, film-forming and stretching can be carried out by the following common methods.

Dyeing is carried out by dipping a polymer film in a dye bath containing the dye composition for an anisotropic dye film of the present invention and, as the case requires, an inorganic salt such as sodium chloride or Glauber's salt and a dyeing assistant such as a surfactant, usually at a temperature of at least 20°C, preferably at least 30°C and usually at most 80°C, preferably at most 50°C, usually for at least 1 minute, preferably at least 3 minutes and usually at most 60 minutes, preferably at most 20 minutes, then boric acid treatment is carried out if necessary, followed by drying. Otherwise, the high molecular weight polymer is dissolved in water and/or a hydrophilic organic solvent such as an alcohol, glycerol or dimethylformamide, then the dye composition for an anisotropic dye film of the present invention, is added to dye the stock solution, and this dyed stock solution is formed into a film by a casting method, a solution-coating method or an extrusion method to obtain a dyed film. The concentration of the high molecular weight polymer dissolved in the solvent varies depending upon the polymer, but it is usually at least 5 wt%, preferably at least 10 wt% and usually at most 30 wt%, preferably at most 20 wt%. Further, the concentration of the dye to be dissolved in the solvent is usually at least 0.1 wt%, preferably at least 0.8 wt% and usually at most 5 wt%, preferably at most 2.5 wt%, based on the polymer.

A non-stretched film obtained by dyeing and film forming as described above, is stretched in a monoaxial direction by a suitable method. By such stretching treatment, the dye molecules will be oriented to produce dichroism. As a method for stretching in a monoaxial direction, a method of carrying out tensile stretching by a wet system method, a method of carrying out tensile stretching by a dry system method or a method of a pinch roll compression stretching in a dry system method may, for example, be mentioned, and any method may be employed. The stretching is carried out usually at a stretching ratio of at least 2 times and at most 9 times. However, in a case where a polyvinyl alcohol or its derivative is employed as the high molecular weight polymer, the stretching ratio is preferably within a range of at least 2.5 times and at most 6 times. After the stretching and orientation treatment, boric acid treatment is carried out for the purpose of improving the water resistance and the polarizing degree of the stretched film. By such boric acid treatment, the light transmittance and the degree of polarization of the anisotropic dye film will be improved. The conditions for such boric acid treatment may vary depending upon the types of the hydrophilic high molecular weight polymer and the dye to be used. However, usually, the boric acid concentration is at least 1 wt%, preferably at least 5 wt% and usually at most 15 wt%, preferably at most 10 wt%. Further, the treating temperature is preferably within a range of usually at least 30°C, preferably at least 50°C and usually at most 80°C. If the boric acid concentration is less than 1 wt%, or if the

treating temperature is less than 30°C, the treating effects tend to be small, and if the boric acid concentration exceeds 15 wt% or if the treating temperature exceeds 80°C, the anisotropic dye film tends to be brittle, such being undesirable.

The thickness of the anisotropic dye film to be obtained by such a dry system film-forming method is preferably at least 50 μm, particularly preferably at least 80 μm and preferably at most 200 μm, particularly preferably at most 100 μm.

On the other hand, as the wet system film-forming method, a known method may be mentioned such as a method wherein the dye composition for an anisotropic dye film of the present invention is formed into a coating solution, which is applied to a various substrate such as a glass plate and dried to have the dye oriented and laminated. The coating method may, for example, be a known method disclosed, for example, in "Coating Engineering" edited by Yuji Harazaki, published by Kabushiki Kaisha Asakura Shoten on March 20, 1971, p. 253-277, or "Preparation and Application of a Molecule Adjusting Material" compiled by Kunihiro Ichimura, published by Kabushiki Kaisha CMC on March 3, 1998, p. 118-149, or a method wherein it is applied on e.g. a substrate having orientation treatment preliminarily applied, by e.g. a spin coating method, a spray coating method, a bar coating method, a roll coating method or a blade coating method. In such a case, if the dye concentration in the dye composition for an anisotropic dye film is too low, no adequate dichroism can be obtained, and if it is too high, the film-forming tends to be difficult. The dye concentration in the dye composition for an anisotropic dye film in the wet system film-forming method is preferably at least 0.1 wt%, particularly preferably at least 1 wt% and preferably at most 50 wt%, particularly preferably at most 30 wt%. The temperature at the time of the coating is preferably at least 0°C and at most 80°C, and the humidity is preferably at least 10%RH and at most 80%RH.

Further, the temperature at the time of drying the coated film is preferably at least 0°C and at most 120°C, and the humidity is at least 10%RH and at most 80%RH.

In a case where the anisotropic dye film is to be formed on a substrate by the wet system film-forming method, the anisotropic dye film is usually preferably at least 50 nm, more preferably at least 100 nm and preferably at most 30 μm, more preferably at most 20 μm, still further preferably at most 1 μm as the thickness after drying.

Further, as the substrate material to be used for the wet system film-forming method, glass, or a triacetate, acrylic, polyester, triacetyl cellulose or urethane type film may, for example, be mentioned. Further, on the surface of such a substrate, an orientation treatment layer may be applied by a known method as disclosed in e.g. "Liquid Crystal Handbook" published by Maruzen Co., Ltd. on October 30, 2000, p. 226-239, in order to control the orientation direction of the dichroic dye.

A protective layer may be provided, as the case requires, on the anisotropic dye film of a dichroic dye obtained by the dry system film-forming method or the wet system film-forming method. Such a protective layer may be formed by lamination of a transparent polymer film such as a triacetate, acrylic, polyester, polyimide, ployacetyl cellulose or urethane type film, and then subjected to practical use.

Further, in a case where the dye composition for an anisotropic dye film of the present invention is used for e.g. a polarizing filter for various display devices such as ECD and OLED, the anisotropic dye film of the present invention may be formed directly on e.g. an electrode substrate constituting such a display device, or a base material having the anisotropic dye film of the present invention formed thereon, may be used as a constituting component of such a display device.

Further, the anisotropic dye film of the present invention is one which comprises a dye and a compound having at least two groups selected from the group consisting of an acidic group, a basic group and a natural group, wherein at least one of said at least two groups is a basic group. In such an anisotropic dye film, the compound having at least two groups selected from the group consisting of an acidic group, a basic group and a neutral group, wherein at least one of said at least two groups is a basic group, and the dye, are the same as the compound of the present invention and the dye, which are contained in the above-mentioned dye composition for an anisotropic dye film of the present invention. Namely, even if the anisotropic dye film is not produced as described above by means of the dye composition for an anisotropic dye film of the present invention, a film comprising a dye and the compound of the present invention, will show the effects of the present invention.

The anisotropic dye film of the present invention will function as a polarizing film whereby a linearly polarized light, circularly polarized light or oval polarized light can be obtained by utilizing the anisotropy in light absorption and further is capable of providing functions as various anisotropic films such as refractive anisotropy and conductivity anisotropy by suitably selecting the film-forming process and the composition comprising the substrate and the dye, whereby it can be made various types of polarizing elements which can be used for various purposes.

POLARIZING ELEMENT

The polarizing element of the present invention is one employing such an anisotropic dye film of the present invention. In a case where the anisotropic dye film of the present invention is formed on a substrate to obtain a polarizing element of the present invention, the formed anisotropic dye film itself may be employed, or not only the above-mentioned protective layer, but also layers having various functions such as an adhesive layer and a reflection-preventing layer,

may be laminated, so that it may be used in the form of a laminate.

EXAMPLES

Now, the present invention will be described in further detail with reference to Examples. However, it should be understood that the present invention is by no means restricted to such specific Examples.
In the following, various evaluations of the formed dye films were carried out as follows.

(1) Dichroic ratio

The transmittance of an anisotropic dye film was measured by a spectrophotometer having an iodine type polarizing element disposed in an incident optical system, whereupon the dichroic ratio was calculated by the following formula.

$$\text{Dichroic ratio (D)} = Az/Ay$$

$$Az = -\log (Tz)$$

$$Ay = -\log (Ty)$$

Tz: Transmittance of the dye film against polarized light in the direction of the absorption axis Ty: Transmittance of the dye film against polarized light in the direction of the polarization axis

(2) Defects

Using a polarization microscope Nikon Optiphot-POL and using an objective lens of 100 magnifications and an ocular lens of 10 magnifications, observation was made at an extinction position, and a photograph was taken by Nikon Coolpix 950. At that time, the sample was set so that the transverse direction of the photograph would be the coating direction.

(3) Order parameter (S)

The transmittance of an anisotropic dye film was measured by a spectrophotometer having an iodine type polarizing element disposed in the incident optical system ("instant multilight measuring system MCPD 2000", manufactured by Otsuka Electronics Co., Ltd., whereupon the order parameter was calculated by the following formula.

$$\text{Order parameter (S)} = (Az-Ay)/(Az+2\times Ay)$$

$$Az = -\log (Tz)$$

$$Ay = -\log (Ty)$$

Tz: Transmittance of the dye film against polarized light in the direction of the absorption axis
Ty: Transmittance of the dye film against polarized light in the direction of the polarization axis

(4) Decrease in the order parameter after heating (unit: %)

The decrease was calculated by the following formula.

$$\text{Decrease in order parameter} = (S1-S2)\times 100/S1$$

S1: Order parameter before heating
S2: Order parameter after heating

In the following, "parts" means "parts by weight".

EXAMPLES USING BASIC AMINO ACIDS AS The COMPOUND OF The PRESENT INVENTION

EXAMPLE 1-1

5 Parts of Dye No. (II-1) and 2.5 parts of L-(+)lysine monohydrochloride (number of basic groups: 2, number of acidic groups: 1) (manufactured by Tokyo Kasei Kogyo Co., Ltd.) were added to 92.5 parts of water (molar ratio of the dye to L-(+)lysine monohydrochloride = 1:1), stirred and dissolved, followed by filtration to obtain a dye composition for an anisotropic dye film of the present invention having a pH of 7. The above dye composition for an anisotropic dye film was applied by an applicator having a gap of 10 μm (manufactured by Imoto Seisakusho) on a glass substrate having a polyimide oriented film formed on its surface by a spin coating method (75 mm × 25 mm, thickness: 1.1 mm, a polyimide oriented film having a polyimide film thickness of about 800 Å was preliminarily subjected to rubbing treatment with cloth), followed by drying naturally to obtain an anisotropic dye film having a thickness of about 0.4 μm.

A photograph of defects of the obtained anisotropic dye film is shown in Fig. 1. Further, the maximum absorption wavelength ($\lambda_{max}$) and the dichroic ratio (D) of the obtained anisotropic dye film are shown in Table 1.

Defects of the anisotropic dye film obtained by this Example were sufficiently little, and the film had a high dichroic ratio (light absorption anisotropy) sufficiently functionable as a polarizing film.

EXAMPLE 1-2

14 Parts of the above exemplified Dye No. (II-2) and 3.1 parts of L-(+)lysine monohydrochloride (number of basic groups: 2, number of acidic groups: 1) (manufactured by Tokyo Kasei Kogyo Co., Ltd.) were added to 82.9 parts of water (molar ratio of the dye to L-(+)lysine monohydrochloride = 1:1), stirred and dissolved, followed by filtration to obtain a dye composition for an anisotropic dye film of the present invention having a pH of 7. This dye composition for an anisotropic dye film was applied on the same substrate as in Example 1-1 under the same conditions to obtain an anisotropic dye film having a thickness of about 0.9 μm.

A photograph of defects of the obtained anisotropic dye film is shown in Fig. 1. Further, the maximum absorption wavelength ($\lambda_{max}$) and the dichroic ratio (D) of the obtained anisotropic dye film are shown in Table 1.

Defects of the anisotropic dye film obtained in this Example were sufficiently little, and the film had a high dichroic ratio (light absorption anisotropy) sufficiently functionable as a polarizing film.

EXAMPLE 1-3

15 Parts of the above exemplified Dye No. (II-3) and 3.3 parts of L-(+)lysine monohydrochloride (number of basic groups: 2, number of acidic groups: 1) (manufactured by Tokyo Kasei Kogyo Co., Ltd.) were added to 81.7 parts of water (molar ratio of the dye to L-(+)lysine monohydrochloride = 1:1), stirred and dissolved, followed by filtration to obtain a dye composition for an anisotropic dye film of the present invention having a pH of 7. This dye composition for an anisotropic dye film was applied to the same substrate as in Example 1-1 under the same conditions to obtain an anisotropic dye film having a thickness of about 0.9 μm.

A photograph of defects of the obtained anisotropic dye film is shown in Fig. 1. Further, the maximum absorption wavelength ($\lambda_{max}$) and the dichroic ratio (D) of the obtained anisotropic dye film are shown in Table 1.

Defects of the anisotropic dye film obtained in this Example were sufficiently little, and the film had a high dichroic ratio (light absorption anisotropy) sufficiently functionable as a polarizing film.

EXAMPLE 1-4

14 Parts of the above exemplified Dye No. (II-2) and 3.5 parts of L-(+)arginine hydrochloride (number of basic groups: 4, number of acidic groups: 1) (manufactured by Tokyo Kasei Kogyo Co., Ltd.) were added to 82.5 parts of water (molar ratio of the dye to L-(+)arginine hydrochloride = 1:1), stirred and dissolved, followed by filtration to obtain a dye composition for an anisotropic dye film of the present invention having a pH of 7. This dye composition for an anisotropic dye film was applied to the same substrate as in Example 1-1 under the same conditions to obtain an anisotropic dye film having a thickness of about 0.9 $\mu$m.

A photograph of defects of the obtained anisotropic dye film is shown in Fig. 1. Further, the maximum absorption wavelength ($\lambda_{max}$) and the dichroic ratio (D) of the obtained anisotropic dye film are shown in Table 1.

Defects of the anisotropic dye film obtained in this Example were sufficiently little, and the film had a high dichroic ratio (light absorption anisotropy) sufficiently functionable as a polarizing film.

COMPARATIVE EXAMPLE 1-1

A dye composition for a dye film was prepared in the same manner as in Example 1-1 except that no L-(+) lysine monohydrochloride was added, and it was applied to the same substrate under the same conditions to obtain a dye film.

With respect to the obtained dye film, various tests were carried out in the same manner as in Example 1-1, the results of the observation of defects are shown in Fig. 1, and the evaluation results of the dichroism are shown in Table 1.

With the dye film obtained in this Comparative Example, striped defects were distinct as compared with the anisotropic dye film in Example 1-1, and the dichroic ratio was lower than the one in Example 1-1.

COMPARATIVE EXAMPLE 1-2

A dye composition for a dye film was prepared in the same manner as in Example 1-2 except that no L-(+) lysine monohydrochloride was added, and it was applied to the same substrate under the same conditions to obtain a dye film.

With respect to the obtained dye film, various tests were carried out in the same manner as in Example 1-1, the results of the observation of defects are shown in Fig. 1, and the evaluation results of the dichroism are shown in Table 1.

With the dye film obtained in this Comparative Example, striped defects were more distinct as compared with the anisotropic dye film in Example 1-2 and 4, and the dichroic ratio was lower than the one in Example 1-2 and 4.

COMPARATIVE EXAMPLE 1-3

A dye composition for a dye film was prepared in the same manner as in Example 1-3 except that no L-(+) lysine monohydrochloride was added, and it was applied to the same substrate under the same conditions to obtain a dye film.

With respect to the obtained dye film, various tests were carried out in the same manner as in Example 1-1, the results of the observation of defects are shown in Fig. 1, and the evaluation results of the dichroism are shown in Table 1.

With the dye film obtained in this Comparative Example, striped defects were distinct as compared with the anisotropic dye film in Example 1-3, and the dichroic ratio was lower than the one in Example 1-3.

TABLE 1

| Examples | Dye No. | Basic amino acid | Evaluation results | |
|---|---|---|---|---|
| | | | Maximum absorption wavelength (nm) | Dichroic ratio |
| Ex. 1-1 | (II-1) | L-(+)lysine monohydrochloride | 430 | 7 |
| Comp. Ex. 1-1 | | Nil | 430 | 4 |

(continued)

| Examples | Dye No. | Basic amino acid | Evaluation results | |
|---|---|---|---|---|
| | | | Maximum absorption wavelength (nm) | Dichroic ratio |
| Ex. 1-2 | (II-2) | L-(+)lysine monohydrochloride | 600 | 35 |
| Ex. 1-4 | | L-(+)arginine hydrochloride | 600 | 34 |
| Comp. Ex. 1-2 | | Nil | 600 | 23 |
| Ex. 1-3 | (II-3) | L-(+)lysine monohydrochloride | 650 | 17 |
| Comp. Ex. 1-3 | | Nil | 650 | 15 |

EXAMPLES IN WHICH AN ACIDIC AMINO ACID OR A NEUTRAL AMINO ACID WAS USED AS THE COMPOUND OF THE PRESENT INVENTION

EXAMPLE 2-1

15 Parts of the above exemplified Dye No. (I-3) and 1.5 parts of L-phenylalanine (manufactured by Kanto Kagaku) as a neutral amino acid were added to 83.5 parts of water (molar ratio of the dye to the amino acid = 1:0.5), stirred and dissolved, followed by filtration to obtain a dye composition for an anisotropic dye film of the present invention. The above dye composition for an anisotropic dye film was applied by No. 2 bar coater (manufactured by Tester Sangyo Co., Ltd.) on a glass substrate having a polyimide oriented film formed on its surface by a spin coating method (75 mm × 25 mm, thickness: 1.1 mm, a polyimide oriented film having a polyimide film thickness of about 800 Å was preliminarily subjected to rubbing treatment with cloth), followed by drying naturally to obtain an anisotropic dye film having a thickness of about 0.4 μm. As a heat resistance test, this anisotropic dye film was held in a constant temperature chamber ("Fine Oven DF-42", manufactured by Yamato Scientific Co., Ltd.) heated to 170°C for 30 minutes, whereby the change in the order parameter before and after the heating was examined.
The order parameter measured before and after the heat resistance test of the obtained anisotropic dye film, and its decrease, are shown in Table 2.
As is evident from Table 2, the anisotropic dye film obtained in this Example was an anisotropic dye film having a high order parameter and good heat resistance, whereby the decrease in the order parameter by heating was low.

EXAMPLE 2-2

15 Parts of the above exemplified Dye No. (I-3) and 0.32 part of β-alanine (manufactured by Tokyo Kasei Kogyo Co., Ltd.) as a neutral amino acid were added to 84.68 parts of water (molar ratio of the dye to the amino acid = 1:0.2), stirred and dissolved, followed by filtration to obtain a dye composition for an anisotropic dye film of the present invention. In the same manner as in Example 2-1, this dye composition for an anisotropic dye film was applied to a substrate, and the obtained anisotropic dye film was subjected to the heat resistance test.
The order parameter measured before and after the heat resistance test of the obtained anisotropic dye film, and its decrease, are shown in Table 2.
As is evident from Table 2, the anisotropic dye film obtained in this Example was an anisotropic dye film having a high order parameter and a good heat resistance, whereby the decrease in the order parameter by heating was low.

EXAMPLE 2-3

15 Parts of the above exemplified Dye No. (I-3) and 1.2 parts of 4-hydroxy-L-proline (manufactured by Tokyo Kasei Kogyo Co., Ltd.) as a neutral amino acid were added to 83.8 parts of water (molar ratio of the dye to the amino acid = 1:0.5), stirred and dissolved, followed by filtration to obtain a dye composition for an anisotropic dye film of the present invention. In the same manner as in Example 2-1, this dye composition for an anisotropic dye film was applied to a substrate, and the obtained anisotropic dye film was subjected to a heat resistance test.
The order parameter measured before and after the heat resistance test of the obtained anisotropic dye film, and its decrease, are shown in Table 2.
As is evident from Table 2, the anisotropic dye film obtained in this Example was an anisotropic dye film having a high order parameter and good heat resistance, whereby the decrease in the order parameter by heating was low.

EXAMPLE 2-4

15 Parts of the above exemplified Dye No. (I-3) and 2.7 parts of L-aspargine monohydrate (manufactured by Wako Pure Chemical Industries, Ltd.) as a neutral amino acid were added to 82.3 parts of water (molar ratio of the dye to the amino acid = 1:1), stirred and dissolved, followed by filtration to obtain a dye composition for an anisotropic dye film of the present invention. In the same manner as in Example 2-1, this dye composition for an anisotropic dye film was applied to a substrate, and the obtained anisotropic dye film was subjected to a heat resistance test.
The order parameter measured before and after the heat treatment of the obtained anisotropic dye film, and its decrease, are shown in Table 2.
As is evident from Table 2, the anisotropic dye film obtained in this Example was an anisotropic dye film having a high order parameter and good heat resistance, whereby the decrease in the order parameter by heating was low.

EXAMPLE 2-5

15 Parts of the above exemplified Dye No. (I-3) and 2.3 parts of L-asparginic acid (manufactured by Tokyo Kasei Kogyo Co., Ltd.) as an acidic amino acid were added to 82.7 parts of water (molar ratio of the dye to the amino acid = 1:1), stirred and dissolved, followed by filtration to obtain a dye composition for an anisotropic dye film of the present invention. In the same manner as in Example 2-1, this dye composition for an anisotropic dye film was applied to a substrate, and the obtained anisotropic dye film was subjected to a heat resistance test.
The order parameter measured before and after the heat resistance test of the obtained anisotropic dye film, and its decrease, are shown in Table 2.
As is evident from Table 2, the anisotropic dye film obtained in this Example was an anisotropic dye film having a high order parameter and good heat resistance, whereby the decrease in the order parameter by heating was low.

EXAMPLE 2-6

15 Parts of the above exemplified Dye No. (I-3) and 2.7 parts of L-glutamic acid (manufactured by Wako Pure Chemical Industries, Ltd.) as an acidic amino acid were added to 82.3 parts of water (molar ratio of the dye to the amino acid = 1:1), stirred and dissolved, followed by filtration to obtain a dye composition for an anisotropic dye film of the present invention. In the same manner as in Example 2-1, this dye composition for an anisotropic dye film was applied to a substrate, and the obtained anisotropic dye film was subjected to a heat resistance test.
The order parameter measured before and after the heat resistance test of the obtained anisotropic dye film, and its decrease, are shown in Table 2.
As is evident from Table 2, the anisotropic dye film obtained in this Example was an anisotropic dye film having a high order parameter and good heat resistance, whereby the decrease in the order parameter by heating was low.

EXAMPLE 2-7

15 Parts of the above exemplified Dye No. (I-15) and 5 parts of L-proline (manufactured by Tokyo Kasei Kogyo Co., Ltd.) as a neutral amino acid were added to 80 parts of water (molar ratio of the dye to the amino acid = 1:2.5), stirred and dissolved, followed by filtration to obtain a dye composition for an anisotropic dye film of the present invention. In the same manner as in Example 2-1, this dye composition for an anisotropic dye film was applied to a substrate, and the obtained anisotropic dye film was subjected to a heat resistance test.
The order parameter measured before and after the heat resistance test of the obtained anisotropic dye film, and its decrease, are shown in Table 2.
As is evident from Table 2, the anisotropic dye film obtained in this Example was an anisotropic dye film having a high order parameter and good heat resistance, whereby the decrease in the order parameter by heating was low.

COMPARATIVE EXAMPLE 2-1

15 Parts of the above exemplified Dye No. (I-3) was added to 85 parts of water, stirred and dissolved, followed by filtration to obtain a dye composition for an anisotropic dye film. In the same manner as in Example 2-1, this dye composition for an anisotropic dye film was applied to a substrate, and the obtained anisotropic dye film was subjected to a heat resistance test.
The order parameter measured before and after the heat resistance test of the obtained anisotropic dye film, and its decrease, are shown in Table 2.
As is evident from Table 2, the obtained anisotropic dye film was an anisotropic dye film inferior in the heat resistance, whereby the decrease in the order parameter by heating was large as compared with Examples 2-1 to 6.

COMPARATIVE EXAMPLE 2-2

15 Parts of the above exemplified Dye No. (I-15) was added to 85 parts of water, stirred and dissolved, followed by filtration to obtain a dye composition for an anisotropic dye film. In the same manner as in Example 2-1, this dye composition for an anisotropic dye film was applied to a substrate, and the obtained anisotropic dye film was subjected to a heat resistance test.
The order parameter measured before and after the heat resistance test of the obtained anisotropic dye film, and its decrease, are shown in Table 2.
As is evident from Table 2, the obtained anisotropic dye film was an anisotropic dye film inferior in the heat resistance, whereby the decrease in the order parameter by heating was large as compared with Example 2-7.

COMPARATIVE EXAMPLE 2-3

16 Parts of the above exemplified Dye No. (I-15) and 5 parts of glycerol were added to 79 parts of water, stirred and dissolved, followed by filtration to obtain a dye composition for an anisotropic dye film. In the same manner as in Example 2-1, this dye composition for an anisotropic dye film was applied to a substrate, and the obtained anisotropic dye film was subjected to a heat resistance test.
The order parameter measured before and after the heat resistance test of the obtained anisotropic dye film, and its decrease, are shown in Table 2.
As is evident from Table 2, the obtained anisotropic dye film was an anisotropic dye film inferior in the heat resistance, whereby the order parameter before the heat resistance test was low as compared with Example 2-7, and the decrease in the order parameter by heating was large.

TABLE 2

| Examples | Dye No. | Additive | Order parameter | | Decrease in order parameter (%) |
|---|---|---|---|---|---|
| | | | Before heat resistance test | After heat resistance test | |
| Example 2-1 | | L-phenylalanine | 0.89 | 0.87 | 2.2 |
| Example 2-2 | | β-alanine | 0.86 | 0.84 | 2.3 |
| Example 2-3 | | 4-Hydroxy-L-proline | 0.88 | 0.84 | 4.5 |
| L-aspargine Example 2-4 | (I-3) | monohydrate | 0.89 | 0.88 | 1.1 |
| Example 2-5 | | L-asparginic acid | 0.88 | 0.85 | 3.4 |
| Example 2-6 | | L-glutamic acid | 0.86 | 0.83 | 3.5 |
| Comparative Example 2-1 | | Nil | 0.84 | 0.80 | 4.8 |
| Example 2-7 | | L-proline | 0.88 | 0.85 | 3.4 |
| Comparative Example 2-2 | (I-15) | Nil | 0.82 | 0.78 | 4.9 |
| Comparative Example 2-3 | | Glycerol | 0.72 | 0.68 | 5.6 |

INDUSTRIAL APPLICABILITY

The anisotropic dye film of the present invention is useful for various polarizing elements such as polarizing plates provided on display devices such as light control devices, liquid crystal devices (LCD) or organic electroluminescence devices (OLED).
The present invention is based on a Japanese Patent Application No. 2004-10283 (filed on January 19, 2004), a Japanese Patent Application No. 2004-149375 (filed on May 19, 2004) and a Japanese Patent Application No. 2004-376442 (filed on December 27, 2004), and their entireties are hereby included by reference.

## Claims

1. A dye composition for an anisotropic dye film, which comprises a dye and a compound having at least two groups selected from the group consisting of an acidic group, a basic group and a neutral group, wherein at least one of said at least two groups is a basic group.

2. The dye composition for an anisotropic dye film according to Claim 1, wherein the content of the compound to the dye is at least 0.05 and at most 4 by molar ratio.

3. The dye composition for an anisotropic dye film according to Claim 1 or 2, wherein the compound is a cyclic compound.

4. The dye composition for an anisotropic dye film according to Claim 1 or 2, wherein the compound is a hydroxylamine.

5. The dye composition for an anisotropic dye film according to Claim 1 or 2, wherein the compound is an amino acid.

6. The dye composition for an anisotropic dye film according to any one of Claims 1 to 5, wherein the composition is a solution which further contains a solvent.

7. The dye composition for an anisotropic dye film according to any one of Claims 1 to 6, wherein the dye is an acidic dye.

8. The dye composition for an anisotropic dye film according to any one of Claims 1 to 7, wherein the dye is an azo dye.

9. An anisotropic dye film formed by using the dye composition for an anisotropic dye film as defined in any one of Claims 1 to 8.

10. The anisotropic dye film according to Claim 9, formed by a wet system deposition method.

11. The anisotropic dye film according to Claim 9 or 10, wherein the film thickness is at most 30 μm.

12. An anisotropic dye film comprising a dye and a compound having at least two groups selected from the group consisting of an acidic group, a basic group and a neutral group, wherein at least one of said at least two groups is a basic group.

13. The anisotropic dye film according to any one of Claims 9 to 12, which has a dichroic ratio of at least 5.

14. The anisotropic dye film according to any one of Claims 9 to 12, wherein the order parameter before a heat resistance test at 170°C for 30 minutes, is at least 0.5, and the decrease in the order parameter after the heat resistance test is at most 7%.

15. A polarizing element employing the anisotropic dye film as defined in any one of Claims 9 to 14.

Fig. 1

| | Dye | Examples | Comparative Examples |
|---|---|---|---|
| 1 | (II−1) | 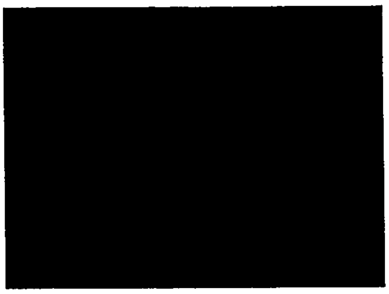 1-1 | 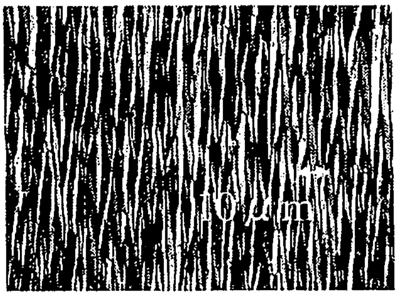 1-1 |
| 2 | (II−2) | 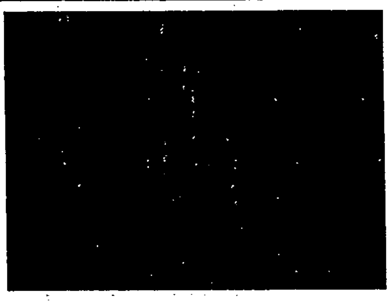 1-2 | 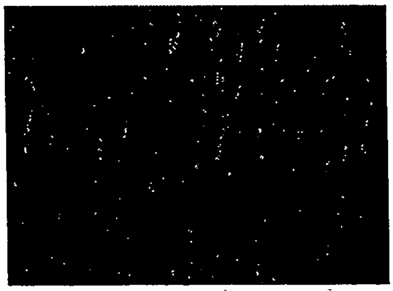 1-2 |
| 3 | (II−3) | 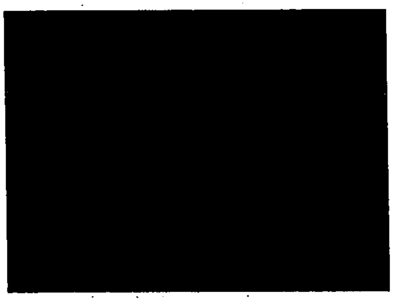 1-3 | 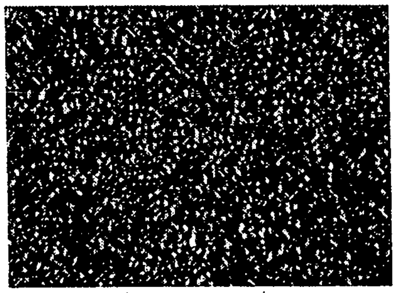 1-3 |
| 4 | (II−2) | 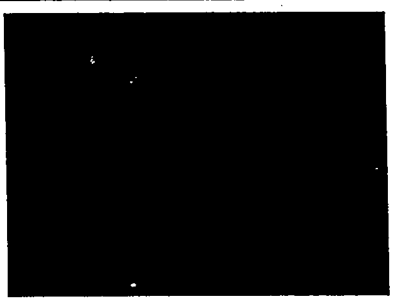 1-4 | 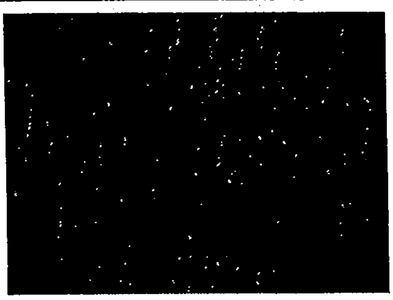 1-2 |

**INTERNATIONAL SEARCH REPORT**

International application No. PCT/JP2005/000808

A. CLASSIFICATION OF SUBJECT MATTER
Int.Cl$^7$ G02B5/30

According to International Patent Classification (IPC) or to both national classification and IPC

B. FIELDS SEARCHED

Minimum documentation searched (classification system followed by classification symbols)
Int.Cl$^7$ G02B5/30

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2002-90526 A (Fuji Photo Film Co., Ltd.), 27 March, 2002 (27.03.02), Full text; all drawings & US 6551529 B2 | 1-15 |
| X | JP 3-78703 A (Nippon Kayaku Co., Ltd.), 03 April, 1991 (03.04.91), Full text (Family: none) | 1-4,6-15 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 April, 2005 (12.04.05) | 26 April, 2005 (26.04.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2400877 A
- JP 2004010283 A
- JP 2004149375 A
- JP 2004376442 A


### Non-patent literature cited in the description


- **DREYER, J.F.** The Fixing of Molecular Orientation. *Phys. And Colloid Chem.,* 1948, vol. 52, 808
- **DREYER, J.F.** Light Polarization From Films of Lyotropic Nematic Liquid Crystals. *Journal de Physique,* 1969, vol. 4, 114
- Kagaku Binran Kisohen. Maruzen Co., Ltd, vol. II, 331
- Chromonics. **J.LYDON ; D. DEMUS ; J. GOODBY ; G.W. GRAY ; H.W. SPIESSM.** Handbook of Liquid Crystals Vol. 2B: Low Molecular Weight Liquid Crystals II. Willey-VCH, 1998, vol. 2B, 981-1007
- New Dye Chemistry. Gihodo, 21 December 1973, 396-409
- Additive for Coating. Willey-VCH, 2000
- Coating Engineering. Kabushiki Kaisha Asakura Shoten, 20 March 1971, 253-277
- Preparation and Application of a Molecule Adjusting Material. Kabushiki Kaisha CMC, 03 March 1998, 118-149
- Liquid Crystal Handbook. Maruzen Co., Ltd, 30 October 2000, 226-239
- instant multilight measuring system MCPD. Otsuka Electronics Co., Ltd, 2000